(19) Europäisches Patentamt
European Patent Office
Office européen des brevets

(11) **EP 4 389 820 A1**

(12) **EUROPEAN PATENT APPLICATION**

(43) Date of publication:
**26.06.2024 Bulletin 2024/26**

(21) Application number: **22215379.3**

(22) Date of filing: **21.12.2022**

(51) International Patent Classification (IPC):
**C08L 23/14** (2006.01) **C08F 210/06** (2006.01)
**C08F 2/00** (2006.01)

(52) Cooperative Patent Classification (CPC):
(C-Sets available)
**C08L 23/142; C08F 210/06;** C08L 2203/18;
C08L 2205/025 (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Borealis AG
1020 Vienna (AT)**
• **Abu Dhabi Polymers Co. Ltd (Borouge) - Sole
Proprietorship L.L.C.
Abu Dhabi (AE)**

(72) Inventors:
• **DEVECI, Suleyman
Abu Dhabi (AE)**
• **DAS, Subrata Kumar
Abu Dhabi (AE)**
• **INEPEKOGLOU, Ioannis
Abu Dhabi (AE)**

(74) Representative: **Kador & Partner Part mbB
Corneliusstraße 15
80469 München (DE)**

(54) **POLYPROPYLENE RANDOM COPOLYMER COMPOSITIONS WITH IMPROVED IMPACT RESISTANCE FOR PIPE APPLICATIONS**

(57) The invention relates to a polypropylene composition comprising
a base resin (A) and a nucleating agent (B),
wherein the base resin (A) consists of a bimodal propylene copolymer (PP) with at least one comonomer being ethylene
wherein the bimodal propylene copolymer (PP) comprises
(PP1) a first propylene copolymer component and
(PP2) a second propylene copolymer component, and

wherein the first propylene copolymer component (PP1) is different from the second propylene copolymer component (PP2), and
wherein the weight ratio of the first propylene copolymer component (PP1) including an optional prepolymer component to the second propylene copolymer component (PP2) is from 30:70 to 70:30, and
wherein the polypropylene composition has

(a) a melt flow rate $MFR_2$ (2.16 kg, 230°C) of 0.15 to 0.50 g/10 min, determined according to ISO 1133 at 230 °C and a load of 2.16 kg,
(b) a total comonomer content of 3.5 to 5.0 wt. % based on the total weight of the bimodal propylene copolymer (PP) determined as described in the specification,
(c) a content of xylene cold solubles (XCS) of equal to or below 8.2 wt.% based on the total weight of the bimodal propylene copolymer (PP) determined according to ISO 16152, and
(d) a Charpy Notched Impact Strength at 23°C of 45.0 $kJ/m^2$ to 95.0 $kJ/m^2$ and a Charpy Notched Impact Strength at 0°C of at least 6.0 $kJ/m^2$ both determined according to ISO 179/eA:2000 using notched injection moulded type 1A specimens, a process for producing said polypropylene composition, an article comprising said polypropylene composition and the use of said polypropylene composition for the production of an article.

EP 4 389 820 A1

**(Cont. next page)**

(52) Cooperative Patent Classification (CPC): (Cont.)

C-Sets
**C08F 210/06, C08F 2/001;**
**C08F 210/06, C08F 4/6492;**
**C08F 210/06, C08F 4/6545;**
**C08L 23/142, C08L 23/142, C08L 23/02;**
**C08L 23/142, C08L 23/142, C08L 23/02,**
**C08L 91/00;**
C08F 210/06, C08F 210/16, C08F 2500/12,
C08F 2500/27, C08F 2500/35, C08F 2500/05,
C08F 2500/05;
C08F 210/06, C08F 210/16, C08F 2500/12,
C08F 2500/27, C08F 2500/35, C08F 2500/31,
C08F 2500/30, C08F 2500/33, C08F 2500/34,
C08F 2500/04, C08F 2500/17

**Description**

The present invention relates to propylene compositions comprising a nucleated propylene copolymer having with an improved balance of properties in regard of mechanical properties including stiffness and toughness which are particularly suitable for pipe applications. The invention further relates to respective processes for the production of such polypropylene compositions, an article comprising the polypropylene compositions and the use of the polypropylene compositions for the production of an article.

Polypropylene materials are frequently used for various pipe and pipe fitting applications, such as fluid transport, e.g. water or natural gas, during which the fluid is pressurized and/or heated. In particular, polypropylene materials are used in applications for plumbing and heating, such as inhouse hot and cold water pressure pipes and fittings, floor and wall heating systems and radiator connections.

Thereby, propylene random copolymers (PPRC) are especially suitable for pressure pipe applications for hot water and industrial pipes as the random copolymers have inter alia good impact performance, stiffness, creep resistance and slow crack properties and long term pressure resistance.

In particular, polypropylene random copolymers for hot and cold water applications require a good balance of stiffness (resistance to static loads - hydrostatic pressure) and toughness (resistance to dynamic loads - impact at low temperatures).

The expression "pressure pipe" used herein refers to a pipe which, when used, is subjected to a positive pressure, that is the pressure inside the pipe being higher than the pressure outside the pipe.

It is well known that increasing one of the impact or stiffness properties sacrifices the other.

For high pressure pipes, however, a good balance between impact properties and stiffness is mandatory to ensure sufficient pressure resistance against internal pressure. Additionally, excellent processability of the propylene random copolymer material is required in order to facilitate pipe extrusion as well as injection moulding of fittings. To increase the stiffness of a propylene random copolymer material to the required level, the amount of comonomer in the polymer can be decreased which, however, has a negative effect on the toughness of the material.

Especially random propylene polymer grades for hot and cold water applications often do not have satisfactory impact resistance, particularly at low temperatures.

Another commonly used approach to improve the impact performance while keeping the stiffness on a high level is to produce block copolymers in which ethylene rich rubber particles are dispersed in a homopolypropylene matrix. However, in pressure pipe applications, block copolymers are not preferred since the rubber particles are weak domains against internal pressure leading to insufficient pressure resistance of the pipes.

Stiffness/toughness balance of bimodal PPRC materials were significantly improved with multimodal reactor design, where comonomer rich material produced in a second reactor improves the toughness of the material without significantly sacrificing the stiffness.

Alternatively, impact modifiers such as for example polyethylene (PE) or Styrene-EthyleneButylene-Styrene (SEBS) can be added to the propylene random copolymers to improve the impact performance which, however, also has a negative effect on the stiffness and, therefore, the pressure resistance. Furthermore, bimodal PPRC/PE blends at finely tuned concentrations proved to have a good stiffness/toughness balance at a cost of additional blending step and inconsistency in material quality due to the blending if proper compounding process and steps are not used.

Reaching a stiffness/toughness balance that can meet and exceed the hot and cold water application requirements with a bimodal material without a PE blend or impact modifier is challenging.

Accordingly, there is a need in the art for propylene copolymer materials showing an improved impact behavior without sacrificing the stiffness.

Therefore, it is an object of the present invention to provide a propylene copolymer applicable for pipe applications which have a highly feasible balance between impact and stiffness properties which balance preferably contributes to pressure resistance. In particular, it is an object to provide polypropylene compositions with improved stiffness/toughness balance without addition of impact modifiers or blending with PE.

Accordingly, the instant invention relates to a polypropylene composition comprising

a base resin (A) and a nucleating agent (B),

wherein the base resin (A) consists of a bimodal propylene copolymer (PP) with at least one comonomer being ethylene

wherein the bimodal propylene copolymer (PP) comprises, preferably consists of,

(PP1) a first propylene copolymer component and

(PP2) a second propylene copolymer component, and

wherein the first propylene copolymer component (PP1) is different from the second propylene copolymer component (PP2), and

wherein the weight ratio of the first propylene copolymer component (PP1) including an optional prepolymer component to the second propylene copolymer component (PP2) is from 30:70 to 70:30, and

wherein the polypropylene composition has

(a) a melt flow rate $MFR_2$ (2.16 kg, 230°C) of 0.15 to 0.50 g/10 min, determined according to ISO 1133 at 230 °C and a load of 2.16 kg,
(b) a total comonomer content of 3.5 to 5.0 wt. % based on the total weight of the bimodal propylene copolymer (PP) determined as described below,
(c) a content of xylene cold solubles (XCS) of equal to or below 8.2 wt.% based on the total weight of the bimodal propylene copolymer (PP) determined according to ISO 16152, and
(d) a Charpy Notched Impact Strength at 23°C of 45.0 $kJ/m^2$ to 95.0 $kJ/m^2$ and a Charpy Notched Impact Strength at 0°C of at least 6.0 $kJ/m^2$ both determined according to ISO 179/eA:2000 using notched injection moulded type 1A specimens.

It has surprisingly been found that the polypropylene composition according to the invention has an advantageous property balance between stiffness and impact as can be seen from the Flexural Modulus, the Tensile Modulus for stiffness and from the Charpy Notched Impact Strength at cold temperature 0°C and also at room temperature. The balance between the Flexural Modulus, the Tensile Modulus and the Charpy Notched Impact Strength provides sufficient stiffness and good impact properties to the polypropylene composition of the invention which balance preferably contribute to pressure resistance as shown in experimental part making it highly suitable for pipe applications, more preferably for hot and cold water pressure pipe applications.

Further preferably, the present polypropylene composition provides advantageous pressure resistance of pipes obtained which is required for pressure pipe applications.

The present polypropylene composition has preferably also an advantageous processing behavior in terms of pipe extrusion processability as can be seen from the rheological properties in particular from $eta_{300}$.

The invention is further directed to a process for producing a polypropylene composition according to any of the preceding claims, wherein the bimodal propylene copolymer (PP) with at least one comonomer being ethylene is polymerized in a multistage polymerization process in the presence of

(I) a solid catalyst component comprising a magnesium halide, a titanium halide and an internal electron donor; and
(II) a cocatalyst comprising an aluminium alkyl and optionally an external electron donor, and
(III) an optional nucleating agent (B), preferably in the presence of a nucleating agent (B);

the multistage process comprising the steps of

(a) continuously polymerizing propylene together with a comonomer selected from alpha-olefins with 2 or 4 to 8 carbon atoms, preferably ethylene, in a first polymerization stage by introducing streams of propylene, hydrogen and ethylene into the first polymerization stage at a temperature of 60 to 80°C and a pressure of 3000 to 6500 kPa to produce a first propylene copolymer component, wherein said first propylene copolymer component (PP1) preferably has a melt flow rate $MFR_2$ 0.4 to 2.0 g/10min, (2.16 kg; 230°C; ISO 1133);
(b) withdrawing from the first polymerization stage a stream comprising said first propylene copolymer component (PP1) and transferring said stream into a second polymerization stage;
(c) polymerizing propylene together with a comonomer selected from alpha-olefins with 2 or 4 to 8 carbon atoms, preferably ethylene, in said second polymerization stage by introducing streams of propylene, ethylene and optionally hydrogen into said second polymerization stage at a temperature of 70 to 90°C and a pressure of 1000 to 3000 kPa to produce a bimodal propylene copolymer (PP) of said first propylene copolymer component (PP1) and a second propylene copolymer component (PP2);
(d) continuously withdrawing a stream comprising said bimodal propylene copolymer (PP) from the second polymerization stage and optionally mixing said bimodal propylene copolymer (PP) with additives; and
(e) extruding said bimodal propylene copolymer mixture into pellets, which have a melt flow rate $MFR_2$, (2.16kg; 230°C; ISO 1133) of 0.15 to 0.5 g/10min,

and wherein the first propylene copolymer component (PP1) is different from the second propylene copolymer component (PP2), and preferably has a higher MFR than the second propylene copolymer component (PP2).

The invention further provides a polypropylene composition obtainable by said process.

The invention is further directed to an article comprising the polypropylene composition according to the invention.

The invention is further directed to the use of the polypropylene composition according to the invention for the production of an article.

In the following, the invention is described in more detail:

**Definitions**

A polyproylene composition according to the invention denotes a polymer derived from at least 50 mol-% propylene monomer units and additional comonomer units.

A propylene copolymer denotes a polymer consisting of propylene monomer units and comonomer units in an amount of at least 0.1 mol%. In a propylene random copolymer the comonomer units are randomly distributed in the polymer chain.

The term 'different' denotes that a polymeric component differs from another polymeric component in at least one measureable property. Suitable properties for differentiating polymeric components are weight average molecular weight, melt flow rate $MFR_2$, density or comonomer content.

**General**

The polypropylene composition of the invention comprises a base resin (A) and a nucleating agent (B), wherein the base resin (A) consists of a bimodal propylene copolymer (PP) with at least one comonomer being ethylene (referred herein also as propylene copolymer). Accordingly, the polypropylene composition of the invention is a bimodal polypropylene composition.

The term 'base resin (A)' denotes the polymeric component of the composition. Hence, the propylene composition does not comprise further polymeric component (s) different to the bimodal propylene copolymer (PP). In particular, the composition does not contain LLDPE or any other type of polyethylene.

The bimodal propylene copolymer (PP) with at least one comonomer being ethylene is a propylene random copolymer.

A propylene random copolymer denotes a copolymer of propylene monomer units and comonomer units in which the comonomer units are randomly distributed in the polymeric chain. Thereby, a propylene random copolymer includes a fraction, which is insoluble in xylene - xylene cold insoluble (XCU) fraction, in an amount of at least 70 wt%, more preferably of at least 80 wt%, still more preferably of at least 85 wt% and most preferably of at least 91.8 wt%, based on the total amount of the propylene random copolymer.

The bimodal random propylene copolymer does not contain an elastomeric polymer phase dispersed therein.

As known for skilled person, a random copolymer is different from heterophasic polypropylene which is a propylene copolymer comprising a propylene homo or random copolymer matrix component (1) and an elastomeric copolymer component (2) of propylene with one or more of ethylene and C4-C8 alpha-olefin copolymers, wherein the elastomeric (amorphous) copolymer component (2) is dispersed in said propylene homo or random copolymer matrix polymer (1).

Furthermore, the bimodal propylene copolymer does not contain LLDPE, more preferably does not contain any polyethylene.

Usually, a propylene polymer comprising at least two propylene polymer fractions (components), which have been produced under different polymerisation conditions resulting in different (weight average) molecular weights and/or different comonomer contents for the fractions, preferably produced by polymerizing in multiple polymerization stages with different polymerization conditions, is referred to as "multimodal". The prefix "multi" relates to the number of different polymer fractions the propylene polymer is consisting of. As an example of multimodal polypropylene, a propylene polymer consisting of two fractions only is called "bimodal", whereas a propylene polymer consisting of three fractions only is called "trimodal".

The term "different" means that the propylene polymer fractions differ from each other in at least one property, preferably in the weight average molecular weight or comonomer content or both, more preferably at least in the weight average molecular weight.

The form of the molecular weight distribution curve, i.e. the appearance of the graph of the polymer weight fraction as function of its molecular weight, of such a multimodal propylene polymer is at least distinctly broadened in comparison with the curves for the individual fractions.

The propylene copolymer (PP) used in the present invention is a bimodal propylene random copolymer comprising a first propylene copolymer component (PP1) and a second propylene copolymer component (PP2). Preferably, the bimodal propylene random copolymer (PP) consists of the two propylene copolymer fractions (PP1) and (PP2).

The propylene random copolymer (PP) used in the polypropylene composition of the invention comprises at least one comonomer being ethylene.

The propylene random copolymer (PP) may comprise only ethylene as comonomer but may further comprise one or more further types of comonomers.

Such further comonomers of said propylene random copolymer (PP) may preferably be selected from $C_2$ and $C_4$ to $C_6$ alpha-olefins.

Preferably, the propylene random copolymer (PP) comprises only ethylene as comonomer.

Both fractions (PP1) and (PP1) are propylene random copolymer fractions, wherein the first propylene copolymer component (PP1) is different from the second propylene copolymer component (PP2).

It is preferred that the bimodal propylene random copolymer (PP), which is preferably the propylene random copolymer with only ethylene as comonomer, comprises, preferably consists of, at least a propylene random copolymer having a low molecular weight (low molecular weight (LMW fraction) and a propylene random copolymer having a high molecular weight (high molecular weight (HMW) fraction). Thereby, the LMW fraction has a lower weight average molecular weight than the HMW fraction.

It is well known that melt flow rate (MFR) of a polymer is an indication of the weight average molecular weight (Mw) of the polymer, the higher the MFR the lower the Mw of the polymer and, respectively, the lower the MFR the higher the Mw of the polymer. Accordingly, the MFR of the low molecular weight fraction is higher than the MFR of the high molecular weight fraction.

Preferably, the first propylene copolymer component (PP1) has a higher $MFR_2$ than the second propylene copolymer component (PP2). Accordingly, preferably the first propylene copolymer component (PP1) is the low molecular weight (LMW) fraction and the second propylene copolymer component (PP2) is the high molecular weight (HMW fraction.

More preferably, the first propylene copolymer component (PP1) has a melt flow rate $MFR_2$ of 0.4 to 2.0 g/10 min, more preferably 0.5 to 1.5 g/10 min determined according to ISO 1133 at 230 °C and a load of 2.16 kg.

The bimodal propylene copolymer (PP) has preferably a melt flow rate $MFR_2$ of 0.15 to 0.50 g/10 min, more preferably 0.20 to 0.40 g/10 min, most preferably 0.23 to 0.35 g/10 min determined according to ISO 1133 at 230 °C and a load of 2.16 kg.

The $MFR_2$ and thus the molecular weight of the of the first propylene copolymer component (PP1) and the second propylene copolymer component (PP2) as well as the bimodal propylene random copolymer (PP) may be controlled by the amount of chain transfer agent and the amount of (PP1) and (PP2) in the final polymer, i.e. the split.

It is further preferred that the $MFR_2$ of the first and second propylene copolymer components (PP1) and (PP2) and the $MFR_2$ of the bimodal propylene random copolymer (PP) have a certain ratio. More preferably the ratio of the $MFR_2$ of the bimodal propylene copolymer (PP) to the $MFR_2$ of the first propylene copolymer component (PP1), $MFR_{2(PP)}/MFR_{2(PP1)}$ is 0.20 to 0.50, more preferably 0.22 to 0.48.

The first propylene copolymer component (PP1) and the second propylene copolymer component (PP2) are propylene random copolymers which may have essentially the same or different comonomer content. It is thereby preferred that the comonomer content of the high molecular weight fraction, i.e. the second propylene copolymer component (PP2) is equal to or higher than, preferably higher than, the comonomer content of the low molecular weight fraction, i.e. the first propylene copolymer component (PP1). It is further preferred that the comonomer content of the obtained bimodal propylene random copolymer (PP) is higher than the comonomer content of the first propylene random copolymer component (PP1).

The comonomer content of first propylene copolymer component (PP1) is preferably 1.0 to 4.0 wt%, more preferably 2.0 to 3.5 wt%, even more preferably 2.3 to 3.1 wt%, most preferably 2.4 to 3.0 wt%, based on the total weight of the first propylene copolymer component (PP1).

The comonomer content of the second propylene copolymer component (PP2) is preferably 4.5 to 9.0 wt.%, more preferably 4.8 to 8.0 wt%, most preferably 5.0 to 7.0 wt% based on the total weight of the second propylene copolymer component (PP2).

The comonomer content of the first propylene copolymer component (PP1) is preferably 1.5 to 6.0 mol%, more preferably 3.0 to 5.5 mol%, still more preferably 3.5 to 5.0 mol%, most preferably 3.5 to 4.5 mol%, based on the total content of monomeric units in the first propylene copolymer component (PP1).

The comonomer content of the second propylene copolymer component (PP2) is preferably 6.1 to 15.0 mol%, more preferably 7.0 to 12.0 mol%, still more preferably 7.5 to 10.5 mol%, most preferably 7.8 to 10.0 mol%, based on the total content of monomeric units in the second propylene copolymer component (PP2).

In a preferred embodiment, the first propylene copolymer component (PP1) has a lower molecular weight than the second propylene copolymer component (PP2), i.e the first propylene copolymer component (PP1) is the low molecular weight (LMW) fraction and the second propylene copolymer component (PP2) is the high molecular weight (HMW) fraction and the second propylene copolymer component (PP2) has higher content of comonomer, preferably ethylene comonomer, than the the first propylene copolymer component (PP1). In this preferred embodiment the content of the comonomer, preferably ethylene comonomer in the first and second propylene copolymer components (PP1) and (PP2), is within the preferred ranges as defined above, and preferably ethylene is the only comonomer used in both (PP1) and (PP2), i.e. no further comonomer is present.

The total comonomer content of the bimodal propylene random copolymer (PP) is 3.5 to 5.0 wt%, preferably 4.0 to 4.8 wt% based on the total weight of the bimodal propylene copolymer (PP).

The total comonomer content of the bimodal propylene random copolymer (PP) is preferably 4.0 to 9.5 mol%, more preferably 5.0 to 9.0 mol%, most preferably 5.5 to 8.0 mol%, based on the total molar content of the propylene random copolymer (PP).

The comonomer content of the first propylene copolymer component (PP1) and the second propylene copolymer component (PP2) as well as the bimodal propylene random copolymer (PP) may be controlled by the amount of comonomer in (PP1) and (PP2) and the amount of (PP1) and (PP2) in the final polymer, i.e. the split.

It is further preferred that the comonomer content of first and second propylene copolymer components (PP1) and (PP2) and the total comonomer content of the bimodal propylene random copolymer (PP) have a certain ratio.

Preferably, the weight ratio of the comonomer content of the first propylene copolymer component (PP1) to the comonomer content of the bimodal propylene copolymer (PP)), both expressed in wt%, $C2_{PP1}/C2_{PP}$, is 0.40 to 0.75, more preferably 0.50 to 0.70, most preferably 0.52 to 0.68.

Furthermore, preferably the weight ratio of the comonomer content of the first propylene copolymer component (PP1) to the comonomer content of the second propylene copolymer component (PP2), $C2_{PP1}/C2_{PP2}$, is 0.36 to 0.54, more preferably 0.38 to 0.52, most preferably 0.40 to 0.50.

According to a preferred embodiment of the invention the ratio $C2_{PP1}/C2_{PP}$ is 0.40 to 0.75, more preferably 0.50 to 0.70, most preferably 0.52 to 0.68 and the ratio $MFR_{2(PP)}/MFR_{2(PP1)}$ is 0.20 to 0.50, most preferably 0.22 to 0.48.

The weight ratio of the first propylene copolymer component (PP1) including an optional prepolymer component to the second propylene copolymer component (PP2) is from 30:70 to 70:30. Preferably, the weight ratio of the first propylene copolymer component (PP1) including an optional prepolymer component to the second propylene copolymer component (PP2) is from 38:62 to 60:40, preferably from 40:60 to 50:50, most preferably from 42:58 to 46:54 .

The first propylene copolymer component (PP1) is preferably present in the bimodal propylene copolymer in an amount of 30 to 70 wt%, more preferably in an amount of 38 to 60 wt%, more preferably in an amount of 40 to 50 wt%, and most preferably in an amount of 42 to 46 wt%, based on the total amount of the propylene random copolymer (PP) (100wt%). The second propylene copolymer component (PP2) is preferably present in the propylene random copolymer in an amount of 70 to 30 wt%, more preferably in an amount of 62 to 40 wt%, more preferably in an amount of 60 to 50 wt% and most preferably in an amount of 58 to 54 wt%, based on the total amount of the propylene random copolymer (PP) (100wt%).

The bimodal propylene random copolymer (PP) may further comprise a prepolymer fraction. In case of the presence of a prepolymer fraction, said fraction is calculated to the amount (wt%) of the low molecular weight fraction or high molecular weight fraction, preferably to the amount of low molecular weight fraction. The prepolymer fraction can be a propylene homopolymer or copolymer.

The bimodal propylene random copolymer (PP) preferably has a density of 890 to 910 kg/m$^3$, preferably 895 to 905 kg/m$^3$.

It is especially preferred that polypropylene composition according to the invention consists of the propylene random copolymer (PP), the nucleating agent (B) and optional further additives, as defined above or below.

Accordingly the amount of the bimodal propylene random copolymer (PP) is preferably 90.0 to 99.75 wt%, more preferably of 95.0 to 99.75 wt% and even more preferably of 96.5 to 99.75 wt%, based on the total weight of the polypropylene composition (100 wt%).

A nucleating agent denotes herein a compound or composition which is added on purpose to increase the crystallization rate within the solid polymer and lead to an increased degree of crystallinity (and often to a smaller crystal size) of the solid polymer.

The nucleating agent (B) used in the polypropylene composition of the invention is preferably a polymeric nucleating agent, preferably a polymer of vinyl compound, more preferably a polymeric nucleating agent obtainable by polymerizing vinylcycloalkane monomers or vinylalkane monomers.

The polymeric nucleating agent is more preferably a polymerized vinyl compound according to the following formula

$$CH_2=CH-CHR^1R^2 \qquad (BI)$$

wherein $R^1$ and $R^2$ together form a 5- or 6-membered saturated, unsaturated or aromatic ring, optionally containing substituents, or independently represent an alkyl group comprising 1 to 4 carbon atoms, whereby in case $R^1$ and $R^2$

form an aromatic ring, the hydrogen atom of the - $CHR^1R^2$ moiety is not present.

Even more preferably, the polymeric nucleating agent is selected from: vinyl cycloalkane polymer, preferably vinyl cyclohexane (VCH) polymer, vinyl cyclopentane polymer, 3-methyl-1-butene polymer and vinyl-2-methyl cyclohexane polymer. The most preferred nucleating agent is vinyl cyclohexane (VCH) polymer.

As mentioned above, in a preferred embodiment, nucleating agent is a polymeric nucleating agent, more preferably a polymer of vinyl compound according to the formula (BI) as defined above, even more preferably vinyl cyclohexane (VCH) polymer.

The amount of nucleating agent preferably is not more than 10000 ppm by weight (means parts per million based on the total weight of the polypropylene composition (100 wt.-%), also abbreviated herein shortly as ppm), more preferably not more than 6000 ppm, even more preferably not more than 5000 ppm, based on the total weight of the bimodal propylene random copolymer (PP) (100 wt.-%).

The amount of the nucleating agent still more preferably is not more than 500 ppm, preferably is from 0.025 to 200 ppm, and more preferably is from 0.1 to 200 ppm, more preferably is from 0.3 to 200 ppm, most preferably is from 0.3 to 100 ppm, based on the total weight of the propylene random copolymer (PP) (100 wt.-%).

In the preferred embodiment the nucleating agent is a polymeric nucleating agent, most preferably a polymer of vinyl compound according to formula (BI) as defined above, even more preferably vinyl cyclohexane (VCH) polymer as defined above, and the amount of said nucleating agent (B) is not more than 200 ppm, more preferably is from 0.025 to 200 ppm, and more preferably is from 0.1 to 200 ppm, more preferably is from 0.3 to 200 ppm, most preferably is from 0.3 to 100 ppm, based on the total weight of the bimodal propylene random copolymer (PP) (100 wt.-%).

The nucleating agent may be introduced to the propylene random copolymer (PP) e.g. during the polymerization process of the propylene random copolymer (PP) or may be incorporated to the propylene random copolymer (PP) by mechanical blending with a nucleated polymer, containing the polymeric nucleating agent (so-called master batch technology) or by mechanical blending of the propylene random copolymer (PP) with the nucleating agent as such.

Thus, the nucleating agent can be introduced to the propylene random copolymer (PP) during the polymerization process of the propylene random copolymer (PP). The nucleating agent is preferably introduced to the propylene random copolymer (PP) by first polymerizing the above defined vinyl compound according to formula (BI) as defined above, even more preferably vinyl cyclohexane (VCH), in the presence of a catalyst system as described above, comprising a solid Ziegler Natta catalyst component, a cocatalyst and optional external donor, and the obtained reaction mixture of the polymer of the vinyl compound according to formula (BI) as defined above, even more preferably vinyl cyclohexane (VCH) polymer, and the catalyst system is then used for producing the bimodal propylene random copolymer (PP).

General preparation of such modified catalyst system is disclosed e.g. in EP 1 028 984 or WO 00/6831.

In another embodiment the polymeric nucleating agent is added with the so called masterbatch technology, where an already nucleated polymer, preferably a propylene homopolymer, containing the polymeric nucleating agent (masterbatch) is blended with the propylene random copolymer (PP). Such a masterbatch is preferably prepared by polymerizing propylene in a sequential polymerization process.

The polypropylene composition of the invention may further include additives. Typical additives are acid scavengers, antioxidants, colorants, light stabilisers, plasticizers, slip agents, anti-scratch agents, dispersing agents, processing aids, lubricants, pigments, fillers, and the like. Each additive can be used e.g. in conventional amounts, the total amount of additives present in the propylene composition being preferably as defined below.

Such additives are commercially available and for example described in "Plastic Additives Handbook", 6* edition 2009 of Hans Zweifel (pages 1141 to 1190).

The total amount of optional further additives is preferably between 0.0001 and 10 wt%, preferably 0.0001 and 5.0 wt%, preferably 0.0001 and 2.5 wt%, more preferably between 0.0001 and 1.5 wt%, still more preferably between 0.0001 and 1.0 wt%, based on the total weight of the polypropylene composition (100 wt%). In case the nucleating agent (B) and/or any optional additive(s) is added in an optional masterbatch, then the carrier material, e.g. carrier polymer, of the additive is calculated to the (total) amount of the additive(s), based on the total weight of the polypropylene composition (100 wt%).

The polypropylene composition of the invention has a melt flow rate $MFR_2$ (2.16 kg, 230°C) of from 0.15 to 0.5 g/10 min, preferably of from 0.2 to 0.4 g/10 min, more preferably of from 0.23 to 0.35 g/10 min, determined according to ISO 1133 at 230 °C and a load of 2.16 kg.

The polypropylene composition of the invention has a total comonomer content of 3.5 to 5.0 wt. %, preferably 4.0 to 4.8 wt% based on the total weight of the bimodal propylene copolymer (PP) determined as described below.

The polypropylene composition has a total comonomer content of preferably 4.0 to 9.5 mol%, more preferably 5.0 to 9.0 mol%, most preferably 5.5 to 8.0 mol%, based on the total molar content of the propylene random copolymer (PP).

Further, the polypropylene composition of the invention has a content of xylene cold solubles (XCS) of equal to or below 8.2 wt%, preferably of 4.0 to 8.0 wt%, more preferably of 5.0 to 7.9 wt.% determined according to ISO 16152 at 25°C.

Further, the polypropylene composition has a Charpy Notched Impact Strength at 23°C of 45.0 kJ/m$^2$ to 95.0 kJ/m$^2$, preferably of 50.0 to 90 kJ/m$^2$ more preferably of 55 to 85 kJ/m$^2$, determined according to ISO 179/1eA:2000 using notched injection moulded type 1A specimens.

Further, the polypropylene composition has a Charpy Notched Impact Strength at 0°C of at least 6.0 kJ/m$^2$, preferably of at least 6.5 kJ/m$^2$ and more preferably of at least 7.0 kJ/m$^2$, determined according to ISO 179/1eA:2000 using notched injection moulded type 1A specimens. The upper limit of the Charpy Notched Impact Strength at 0°C is usually not higher than 15 kJ/m$^2$.

Further, the polypropylene composition preferably has a flexural modulus of 700 to 1400 MPa, more preferably 740 to 1200 MPa and most preferably 780 to 1100 MPa determined according to ISO 178 using injection moulded 80 × 10 × 4.0 mm$^3$ (length × width × thickness) specimens.

Further, the polypropylene composition preferably has a tensile modulus of from 700 to 1200 MPa, preferably 750 to 1100 MPa, more preferably 800 to 1000 MPa determined according to ISO 527-2 using injection molded type 1A specimens.

Further, the polypropylene composition preferably has a melting temperature $T_m$ of from 135°C to 155°C, preferably 137° C to 152° C, preferably 140° C to 150° C determined according to ISO 11357-3.

Still further, the polypropylene composition preferably has a crystallization temperature $T_c$ of not less than 100° C, preferably 105° C to 130° C, preferably 107° C to 127° C, preferably 110° C to 125° C determined according to ISO 11357 -3.

Furthermore, the polypropylene composition preferably has a complex viscosity at 300 rad/s eta* of 400 Pa·s to 1000 Pa·s, more preferably 450 Pa·s to 900 Pa·s, most preferably 500 Pa·s to 800 Pas determined according to ISO 6721-1 and 6721-10.

Furthermore, the polypropylene composition preferably has a weight average molecular weight Mw of 400 kg/mol to 800 kg/mol determined according to ISO 16014-1:2003 and ISO 16014-4:2003.

Furthermore, the polypropylene composition preferably has a number average molecular weight Mn of of 30 kg/mol to 60 kg/mol determined according to ISO 16014-1:2003 and ISO 16014-4:2003

Furthermore, the polypropylene composition preferably has a molecular weight distribution (MWD = Mw/Mn wherein Mn is the number average molecular weight and Mw is the weight average molecular weight) of 10 to 20, more preferably of 11 to 19, most preferably 12 to 18 determined according to ISO 16014-1:2003 and ISO 16014-4:2003.

**Process**

The polypropylene composition of the invention is preferably produced in a continuous multistage process in a conventional manner. It is to be understood that as soon as the inventors have found the advantageous property balance resulting to the polypropylene composition, then for industrial scale production it is within the skills of a skilled person to adjust process parameters and controls to obtain the properties of the polypropylene composition. The process preferably comprises at least two polymerisation stages.

Accordingly, the invention relates to a process for producing a polypropylene composition wherein the bimodal propylene random copolymer (PP) with at least one comonomer being ethylene is polymerized in a multistage polymerization process in the presence of

    (I) a solid catalyst component comprising a magnesium halide, a titanium halide and an internal electron donor; and

    (II) a cocatalyst comprising an aluminium alkyl and optionally an external electron donor, and

    (III) an optional nucleating agent (B), preferably in the presence of a nucleating agent (B);

    the multistage process comprising the steps of

    (a) continuously polymerizing propylene together with a comonomer selected from alpha-olefins with 2 or 4 to 8 carbon atoms, preferably ethylene, in a first polymerization stage by introducing streams of propylene, hydrogen and ethylene into the first polymerization stage at a temperature of 60 to 80°C and a pressure of 3000 to 6500 kPa to produce a first random propylene copolymer component (PP1), wherein said first random propylene copolymer has a melt flow rate MFR$_2$ 0.4 to 2.0 g/10min, (2.16 kg; 230°C; ISO 1133);

    (b) withdrawing from the first polymerization stage a stream comprising said first random propylene copolymer component (PP1) and transferring said stream into a second polymerization stage;

    (c) polymerizing propylene together with a comonomer selected from alpha-olefins with 2 or 4 to 8 carbon atoms, preferably ethylene, in said second polymerization stage by introducing streams of propylene, ethylene and optionally hydrogen into said second polymerization stage at a temperature of 70 to 90°C and a pressure of 1000 to 3000 kPa to produce a bimodal random propylene copolymer (PP) of said first random propylene copolymer component (PP1) and a second random propylene copolymer component (PP2);

(d) continuously withdrawing a stream comprising said bimodal random propylene copolymer (PP) from the second polymerization stage and optionally mixing said bimodal propylene copolymer with additives; and

(e) extruding said bimodal random propylene copolymer mixture into pellets, which have a melt flow rate $MFR_2$, (2.16kg; 230°C; ISO 1133) of 0.15 to 0.5 g/10min,

and wherein the first random propylene copolymer component (PP1) is different from the second random propylene copolymer component (PP2), preferably the first random propylene copolymer component (PP1) has a higher MFR than the second random propylene copolymer component (PP2).

It is especially preferred that the process according to the present invention includes the following process steps: (aa) polymerising a vinyl compound of the formula (BI) as defined above or below, preferably vinyl cyclohexane (VCH), in the presence of a catalyst system comprising the solid catalyst component (I) to obtain a modified catalyst system which is the reaction mixture comprising the solid catalyst component (I) and the produced polymer of the vinyl compound of formula (BI), preferably, and wherein, the weight ratio (g) of the polymer of the vinyl compound of the formula (BI) to the solid catalyst component (I) is up to 5 (5:1), preferably up to 3 (3:1) most preferably is from 0.5 (1:2) to 2 (2:1), and the obtained modified catalyst system is fed to polymerisation step (a) of the multistage process for producing the bimodal propylene copolymer (PP).

The process of the invention is described in details below:

Thereby, conventional polymerization techniques, e.g. gas phase, solution phase, slurry or bulk polymerization can be used.

In general, a combination of slurry (or bulk) and at least one gas phase reactor is often preferred for the polymerisation of the bimodal propylene random copolymer (PP). It is further preferred that the reactor order is slurry (or bulk) then one or more gas phase reactors.

In case of propylene polymerisation for slurry reactors, the reaction temperature will generally be in the range 60 to 110°C, e.g. 60 to 85 °C, the reactor pressure will generally be in the range 5 to 80 bar, e.g. 20 to 60 bar, and the residence time will generally be in the range 0.1 to 5 hours, e.g. 0.3 to 2 hours. The monomer is usually used as reaction medium.

For gas phase reactors, the reaction temperature used will generally be in the range 60 to 115 °C, e.g. 70 to 110 °C, the reactor pressure will generally be in the range 10 to 25 bar, and the residence time will generally be 0.5 to 8 hours, e.g. 0.5 to 4 hours. The gas used will be the monomer optionally as mixture with a non-reactive gas such as nitrogen or propane.

In addition to actual polymerisation steps and reactors, the process can contain any additional polymerisation steps, like prepolymerisation step, and any further after reactor handling steps as known in the art.

It is preferred that the bimodal propylene random copolymer (PP) is produced in a sequential polymerization process comprising at least two polymerization zones operating at different conditions to produce the bimodal propylene random copolymer (PP). The polymerization zones may operate in slurry, solution, or gas phase conditions or their combinations. Suitable processes are disclosed, among others, in WO-A-98/58975, WO-A-98/58976, EP-A-887380 and WO-A-98/58977.

In a preferred embodiment, the prepolymerization is conducted in a continuous manner as bulk slurry polymerization in liquid propylene, i.e. the liquid phase mainly comprises propylene, with minor amount of other reactants and optionally inert components dissolved therein. Preferably the prepolymerization is conducted in a continuous stirred tank reactor or a loop reactor, preferably in a loop reactor.

The prepolymerization reaction is typically conducted at a temperature of 0 to 60 °C, preferably from 10 to 50 °C, and more preferably from 20 to 45 °C.

The pressure in the prepolymerization reactor is not critical but must be sufficiently high to maintain the reaction mixture in liquid phase. Thus, the pressure may be from 20 to 100 bar, for example 30 to 70 bar.

The reaction conditions are well known in the art as disclosed, among others, in GB 1580635.

In the prepolymerization step it is also possible to feed comonomers into the prepolymerization stage. Examples of suitable comonomers are ethylene or alpha-olefins having from 4 to 8 carbon atoms. Especially suitable comonomers are ethylene, 1-butene, 1-hexene, 1-octene or their mixtures. Especially preferred is ethylene as comonomer.

In a preferred embodiment for polymerizing the bimodal propylene random copolymer (PP) the first propylene random copolymer component (PP1) is preferably produced in a first polymerization stage. Said first propylene random copolymer component (PP1) most preferably reflects the low molecular weight (LMW) fraction of the bimodal propylene random copolymer (PP) as defined above.

The first propylene random copolymer component (PP1) is produced by introducing a polymerization catalyst, optionally through the prepolymerization stage as disclosed above, into the first polymerization stage together with a first monomer mixture containing propylene and a comonomer selected from ethylene and alpha-olefins containing 4 to 8 carbon atoms. The content of the comonomers is controlled to obtain a desired comonomer content in the first propylene random copolymer. The comonomer content of said first propylene random copolymer component (PP1) preferably reflects the comonomer content of the low molecular weight (LMW) fraction of the bimodal propylene random copolymer (PP) as defined above.

The first propylene random copolymer component (PP1) produced in the first polymerization stage has preferably a $MFR_2$ of from 0.4 to 2.0 g/10 min. More preferably, the $MFR_2$ of the first propylene random copolymer component (PP1), preferably of the low molecular weight (LMW fraction of the bimodal propylene random copolymer (PP), is 0.5 to 1.5 g/10 min. It is preferred that the $MFR_2$ of the first propylene random copolymer component (PP1) remains within these limits.

The polymerization in the first polymerization zone is preferably conducted in slurry in a loop reactor. For this reason the terms "first polymerization stage" and "loop reactor" may be used interchangeably within the context of the present invention. Then the polymer particles formed in the polymerization, together with the catalyst fragmented and dispersed within the particles, are suspended in the fluid hydrocarbon. The slurry is agitated to enable the transfer of reactants from the fluid into the particles. In loop reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654.

Slurry polymerization is preferably a so called bulk polymerization. By "bulk polymerization" is meant a process where the polymerization is conducted in a liquid monomer essentially in the absence of an inert diluent. However, as it is known to a person skilled in the art the monomers used in commercial production are never pure but always contain aliphatic hydrocarbons as impurities. For instance, the propylene monomer may contain up to 5 % of propane as an impurity. As propylene is consumed in the reaction and also recycled from the reaction effluent back to the polymerization, the inert components tend to accumulate, and thus the reaction medium may comprise up to 40 wt-% of other compounds than monomer. It is to be understood, however, that such a polymerization process is still within the meaning of "bulk polymerization", as defined above.

The temperature in the slurry polymerization is typically from 50 to 110 °C, preferably from 60 to 80 °C and more preferably from 65 to 75 °C. The pressure is from 1 to 150 bar, preferably from 10 to 100 bar and most preferably from 30 to 65 bar.

The slurry may be withdrawn from the reactor either continuously or intermittently. A preferred way of intermittent withdrawal is the use of settling legs where the solids concentration of the slurry is allowed to increase before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and EP-A-1860125. The continuous withdrawal may be combined with a suitable concentration method, as disclosed in EP-A-1860125 and EP-A-1591460.

Into the slurry polymerization stage other components are also introduced as it is known in the art. Thus, hydrogen is used to control the molecular weight of the polymer. Process additives, such as antistatic agent, may be introduced into the reactor to facilitate a stable operation of the process.

Preferably, the ratio of comonomer to propylene in the first polymerization stage is 0.2 to 20 mol/kmol, more preferably 0.5 to 15 mol/kmol, still more preferably 0.5 to 10 mol/kmol and most preferably 1 to 10 mol/kmol.

Preferably, the ratio of hydrogen to propylene in the first polymerization stage is 0.1 to 5.0 mol/kmol, more preferably 0.1 to 4.5 mol/kmol, still more preferably 0.2 to 4.0 mol/kmol and most preferably 0.3 to 3.0 mol/kmol.

The slurry is preferably conducted directly into a second polymerization stage, which preferably is a gas phase polymerization stage, to produce the second propylene random copolymer. By "directly" it is meant that the slurry is introduced from the loop reactor into the gas phase reactor without a flash step between the slurry and gas phase polymerization stages for removing at least a part of the reaction mixture from the polymer. Thereby, substantially the entire slurry stream withdrawn from the first polymerization stage is directed to the second polymerization stage. This kind of direct feed is described in EP-A-887379, EP-A-887380, EP-A-887381 and EP-A-991684. It is preferred that the whole slurry stream withdrawn from the loop reactor is directed into the gas phase reactor without any separation step in between. However, it is within the scope of the present invention to take small samples or sample streams from the polymer or from the fluid phase or from both for analyzing the polymer and/or the composition of the reaction mixture. As understood by the person skilled in the art, the volume of such sample streams is small compared to the total slurry stream withdrawn from the loop reactor and typically much lower than 1 % by weight of the total stream, such as at most 0.1 % or 0.01% or even 0.001 % by weight.

When the entire slurry stream from the first polymerization stage is introduced into the second polymerization stage then substantial amounts of propylene, comonomer and hydrogen are introduced into the second polymerization stage together with the polymer.

As discussed above, a certain amount of propylene and comonomer is introduced into the second polymerization stage from the first polymerization stage. However, this is generally not sufficient to maintain desired propylene and comonomer concentrations in the second polymerization stage. Therefore additional propylene and comonomer are typically introduced into the second polymerization stage. They are introduced to maintain a desired propylene concentration and to reach a desired ratio of comonomer to propylene in the fluidization gas. Even though the actual comonomer to monomer ratio that is needed to reach the desired content of comonomer in the polymer depends on the catalyst used in the process, the composition of the monomer and comonomer feeds is suitably adjusted so that the fluidization gas has a ratio of comonomer to propylene of about 10 to 100 mol/kmol, preferably from 15 to 70 mol/kmol. Such ratios have been found to yield good results for some catalysts.

It is also often necessary to introduce additional hydrogen into the second polymerization stage to control the melt index of the copolymer mixture. Suitably, the hydrogen feed is controlled to maintain constant hydrogen to propylene ratio in the fluidization gas. The actual ratio depends on the catalyst. Good results have been obtained by maintaining the ratio within the range of from 0.1 to 3 mol/kmol, preferably from 0.2 to 2.5 mol/kmol.

In a fluidized bed gas phase reactor olefins are polymerized in the presence of a polymerization catalyst in an upwards moving gas stream. The reactor typically contains a fluidized bed comprising the growing polymer particles containing the active catalyst, said fluidized bed having its base above a fluidization grid.

The polymer bed is fluidized with the help of the fluidization gas comprising the olefin monomer, eventual comonomer(s), eventual chain growth controllers or chain transfer agents, such as hydrogen, and eventual inert gas. The fluidization gas is introduced into an inlet chamber at the bottom of the reactor. To make sure that the gas flow is uniformly distributed over the cross-sectional surface area of the inlet chamber the inlet pipe may be equipped with a flow dividing element as known in the art, e.g. US-A-4933149 and EP-A-684871. One or more of the above-mentioned components may be continuously added into the fluidization gas to compensate for losses caused, among other, by reaction or product withdrawal.

From the inlet chamber the gas flow is passed upwards through a fluidization grid into the fluidized bed. The purpose of the fluidization grid is to divide the gas flow evenly through the cross-sectional area of the bed. Sometimes the fluidization grid may be arranged to establish a gas stream to sweep along the reactor walls, as disclosed in WO-A-2005/087361. Other types of fluidization grids are disclosed, among others, in US-A-4578879, EP 600414 and EP-A-721798. An overview is given in Geldart and Bayens: The Design of Distributors for Gas-fluidized Beds, Powder Technology, Vol. 42, 1985.

The fluidization gas passes through the fluidized bed. The superficial velocity of the fluidization gas must be higher that minimum fluidization velocity of the particles contained in the fluidized bed, as otherwise no fluidization would occur. On the other hand, the velocity of the gas should be lower than the terminal velocity, as otherwise the whole bed would be entrained with the fluidization gas. The minimum fluidization velocity and the terminal velocity can be calculated when the particle characteristics are known by using common engineering practise. An overview is given, among others in Geldart: Gas Fluidization Technology, J.Wiley & Sons, 1986.

When the fluidization gas is contacted with the bed containing the active catalyst the reactive components of the gas, such as monomers and chain transfer agents, react in the presence of the catalyst to produce the polymer product. At the same time the gas is heated by the reaction heat.

The unreacted fluidization gas is removed from the top of the reactor and cooled in a heat exchanger to remove the heat of reaction. The gas is cooled to a temperature which is lower than that of the bed to prevent the bed from heating because of the reaction. It is possible to cool the gas to a temperature where a part of it condenses. When the liquid droplets enter the reaction zone they are vaporised. The vaporisation heat then contributes to the removal of the reaction heat. This kind of operation is called condensed mode and variations of it are disclosed, among others, in WO-A-2007/025640, US-A-4543399, EP-A-699213 and WO-A-94/25495. It is also possible to add condensing agents into the recycle gas stream, as disclosed in EP-A-696293. The condensing agents are non-polymerizable components, such as n-pentane, isopentane, n-butane or isobutane, which are at least partially condensed in the cooler.

The gas is then compressed and recycled into the inlet chamber of the reactor. Prior to the entry into the reactor fresh reactants are introduced into the fluidization gas stream to compensate for the losses caused by the reaction and product withdrawal. It is generally known to analyze the composition of the fluidization gas and introduce the gas components to keep the composition constant. The actual composition is determined by the desired properties of the product and the catalyst used in the polymerization.

The polymeric product may be withdrawn from the gas phase reactor either continuously or intermittently. Combinations of these methods may also be used. Continuous withdrawal is disclosed, among others, in WO-A-00/29452. Intermittent withdrawal is disclosed, among others, in US-A-4621952, EP-A-188125, EP-A-250169 and EP-A-579426.

The top part of the gas phase reactor may include a so called disengagement zone. In such a zone the diameter of the reactor is increased to reduce the gas velocity and allow the particles that are carried from the bed with the fluidization gas to settle back to the bed.

The bed level may be observed by different techniques known in the art. For instance, the pressure difference between the bottom of the reactor and a specific height of the bed may be recorded over the whole length of the reactor and the bed level may be calculated based on the pressure difference values. Such a calculation yields a time-averaged level. It is also possible to use ultrasonic sensors or radioactive sensors. With these methods instantaneous levels may be obtained, which of course may then be averaged over time to obtain a time-averaged bed level.

Also antistatic agent(s) may be introduced into the gas phase reactor if needed. Suitable antistatic agents and methods to use them are disclosed, among others, in US-A-5026795, US-A-4803251, US-A-4532311, US-A-4855370 and EP-A-560035. They are usually polar compounds and include, among others, water, ketones, aldehydes and alcohols.

The reactor may also include a mechanical agitator to further facilitate mixing within the fluidized bed. An example of suitable agitator design is given in EP-A-707513.

Typically the fluidized bed polymerization reactor is operated at a temperature within the range of from 50 to 100 °C, preferably from 70 to 90 °C. The pressure is suitably from 10 to 40 bar, preferably from 10 to 30 bar.

In the second polymerization stage preferably a copolymer mixture comprising the first propylene random copolymer component (PP1) and a second copolymer component (PP2) is formed.

Said first propylene random copolymer component (PP1) preferably reflects the low molecular weight (LMW) fraction of the bimodal propylene random copolymer (PP) and said second propylene random copolymer component (PP2) preferably reflects the high molecular weight (HMW) fraction of the bimodal propylene random copolymer (PP) as defined above. Thus, the copolymer mixture comprising the first propylene random copolymer component (PP1) and a second propylene random copolymer component (PP2) preferably reflects a mixture of the low molecular weight (LMW) fraction and the high molecular weight (HMW fraction of the bimodal propylene random copolymer (PP) as defined above. The amount of any prepolymer fraction thereby preferably adds to the amount of the low molecular weight fraction.

The copolymer mixture is formed by introducing the particles of the first propylene random copolymer component (PP1), containing active catalyst dispersed therein, together with additional propylene and comonomer into the second polymerization stage. This causes the second copolymer component (PP2) to form on the particles containing the first propylene random copolymer. The second polymerization stage is preferably conducted in a fluidized bed gas phase reactor. For this reason the terms "second polymerization stage" and "gas phase reactor" may be used interchangeably within the context of the present invention.

The comonomer is selected from ethylene and alpha-olefins containing 4 to 8 carbon atoms. The comonomer used in the second polymerization stage may be the same as or different from the comonomer used in the first polymerization stage with the proviso that ethylene is used as comonomer in at least one polymerization stage. Preferably the same comonomer is used in the first and the second polymerization stage. Preferably, ethylene is used as comonomer in the first and the second polymerization stage.

Also in the second polymerization stage the content of the comonomers is controlled to obtain the desired comonomer content of the copolymer mixture. The obtained reaction mixture is the polymer of bimodal propylene random copolymer (PP).

The comonomer content of first propylene copolymer component (PP1) is preferably 1.0 to 4.0 wt%, more preferably 2.0 to 3.5 wt%, even more preferably 2.3 to 3.1 wt%, most preferably 2.4 to 3.0 wt%, based on the total weight of the first propylene copolymer component (PP1).

The comonomer content of the second propylene copolymer component (PP2) is preferably 4.5 to 9.0 wt.%, more preferably 4.8 to 8.0 wt%, most preferably 5.0 to 7.0 wt% based on the total weight of the second propylene copolymer component (PP2).

The comonomer content of the first propylene copolymer component (PP1) is preferably 1.5 to 6.0 mol%, more preferably 3.0 to 5.5 mol%, still more preferably 3.5 to 5.0 mol%, most preferably 3.5 to 4.5 mol%, based on the total content of monomeric units in the first propylene copolymer component (PP1).

The comonomer content of the second propylene copolymer component (PP2) is preferably 6.1 to 15.0 mol%, more preferably 7.0 to 12.0 mol%, still more preferably 7.5 to 10.5 mol%, most preferably 7.8 to 10.0 mol%, based on the total content of monomeric units in the second propylene copolymer component (PP2).

Preferably, the obtained bimodal propylene random copolymer (PP) has a total comonomer content of 3.5 to 5.0 wt% based on the total weight of the propylene random copolymer (PP), and preferably as further defined above or in the claims.

Furthermore, preferably the comonomer content of the obtained bimodal propylene random copolymer (PP) is higher than the comonomer content of the first propylene random copolymer component (PP1). Preferably, the ratio of the comonomer content of the first propylene random copolymer component (PP1) to the comonomer content of the obtained bimodal propylene random copolymer (PP) (both expressed in wt%), $C2_{PP1}/C2_{PP}$, is 0.40 to 0.75, more preferably 0.50 to 0.70, preferably 0.52 to 0.68.

Furthermore, preferably the comonomer content of the second propylene random copolymer component (PP2) is higher than the comonomer content of the first propylene random copolymer component (PP1). Preferably, the ratio of the comonomer content of the first propylene copolymer component (PP1) to the comonomer content of the second propylene copolymer component (PP2) (both expressed in wt%), $C2_{PP1}/C2_{PP2}$, is 0.36 to 0.54, more preferably 0.38 to 0.52, most preferably 0.40 to 0.50

Preferably, the $MFR_2$ of the obtained bimodal propylene random copolymer (PP) is from 0.15 to 0.50 g/10 min, more preferably 0.20 to 0.40 g/10 min, most preferably 0.23 to 0.35 g/10 min.

Furthermore, the MFR of the obtained bimodal propylene random copolymer (PP) is lower than the MFR of the first propylene random copolymer (PP1). Preferably, the ratio of the $MFR_2$ of the obtained bimodal propylene random copolymer (PP) to the $MFR_2$ of the first propylene random copolymer component (PP1), $MFR_{2(PP)}/MFR_{2(PP1)}$, is 0.20 to 0.50, most preferably 0.22 to 0.48.

According to a preferred embodiment of the invention the ratio $C2_{PP1}/C2_{PP}$ is 0.40 to 0.75, more preferably 0.50 to 0.70, most preferably 0.52 to 0.68 and the ratio $MFR_{2(PP)}/MFR_{2(PP1)}$ is 0.20 to 0.50, most preferably 0.22 to 0.48.

The obtained bimodal propylene random copolymer (PP) comprises the first propylene copolymer component (PP1) including an optional prepolymer component and the second propylene copolymer component (PP2) in a weight ratio of from 30:70 to 70:30, and preferably as further defined above or in the claims. Respective amounts and preferred amounts of (PP1) and (PP2) are defined above.

As to catalyst, the bimodal propylene random copolymer (PP) can be produced by polymerisation in the presence of any conventional coordination catalyst system including Ziegler-Natta, chromium and single site (like metallocene catalyst), preferably in the presence of a Ziegler-Natta catalyst system. Such Ziegler-Natta catalyst system typically comprises a solid catalyst component, preferably a solid transition metal component, and a cocatalyst, and optionally an external donor. The solid catalyst component comprises most preferably a magnesium halide, a titanium halide and an internal electron donor. Such catalysts are well known in the art.

It is preferred that the nucleating agent (B) is introduced to the bimodal propylene random copolymer (PP) during the polymerisation process of the bimodal propylene random copolymer (PP).

More preferably, a vinyl compound of the formula (BI) as defined above or below, preferably vinyl cyclohexane (VCH), is polymerised in the presence of a catalyst system comprising the solid catalyst component, preferably a solid Ziegler Natta catalyst component, to obtain a modified catalyst system which is the reaction mixture comprising the solid catalyst component and the produced polymer of the vinyl compound of formula (BI). In the obtained modified catalyst system the weight ratio (g) of the polymer of the vinyl compound of the formula (BI), to the solid catalyst component is preferably up to 5 (5:1), preferably up to 3 (3:1) most preferably is from 0.5 (1:2) to 2 (2:1). The obtained modified catalyst system is then used for the polymerisation of the bimodal propylene random copolymer (PP) of the invention as described above.

General preparation of the modified catalyst system of the invention and the polypropylene nucleated with a vinyl compound (I) is disclosed e.g. in EP 1 028 984.

As to the solid Ziegler Natta catalyst component used for the modification, said catalyst component comprises preferably a transition metal component which preferably is a titanium halide and a magnesium halide. These compounds may be supported on a particulate support, such as inorganic oxide, like silica or alumina, or, usually, the magnesium halide to form above said solid support. Examples of such solid catalyst components are disclosed, among others, in WO 87/07620, WO 92/21705, WO 93/11165, WO 93/11166, WO 93/19100, WO 97/36939, WO 98/12234, WO 99/33842.

The solid catalyst components for polymerising the bimodal propylene random copolymer (PP) typically comprise, in addition to the magnesium halide and transition metal compound, an electron donor (internal electron donor).

Suitable electron donors are, among others, esters of carboxylic acids, like phthalates, citraconates, and succinates. Also oxygen- or nitrogen-containing silicon compounds may be used. Examples of suitable compounds are shown in WO 92/19659, WO 92/19653, WO 92/19658, US 4,347,160, US 4,382,019, US 4,435,550, US 4,465,782, US 4,473,660, US 4,530,912 and US 4,560,671.

Moreover, said solid catalyst components are preferably used in combination with well known external electron donors, including without limiting to, ethers, ketones, amines, alcohols, phenols, phosphines and silanes, for example organosilane compounds containing Si-OCOR, Si-OR, or Si-NR2 bonds, having silicon as the central atom, and R is an alkyl, alkenyl, aryl, arylalkyl or cycloalkyl with 1-20 carbon atoms; and well known cocatalysts, which preferably comprise an aluminium alkyl compound as known in the art, to polymerise the bimodal propylene random copolymer (PP).

When the nucleating agent (B) is introduced to the bimodal propylene random copolymer (PP) during the polymerisation process of the bimodal propylene random copolymer (PP), the amount of nucleating agent (B) present in the bimodal propylene random copolymer (PP) is preferably not more than 500 ppm, more preferably is 0.025 to 200 ppm, still more preferably is 1 to 100 ppm, and most preferably is 5 to 100 ppm, based on the bimodal propylene random copolymer (PP) and the nucleating agent (B), preferably based on the total weight of the polypropylene composition (100 wt%).

The invention thus further relates to a polypropylene composition obtainable by the process as defined above.

**Extrusion**

When the polymer has been removed from the last polymerisation stage, it is preferably subjected to process steps for removing the residual hydrocarbons from the polymer. Such processes are well known in the art and can include pressure reduction steps, purging steps, stripping steps, extraction steps and so on. Also combinations of different steps are possible. After the removal of residual hydrocarbons the second propylene copolymer composition is preferably mixed with additives as it is well known in the art. Such additives include antioxidants, process stabilizers, neutralisers, lubricating agents, nucleating agents, pigments and so on. The polymer particles are then extruded to pellets as it is known in the art. Preferably co-rotating twin screw extruder is used for the extrusion step. Such extruders are manufactured, for instance, by Coperion (Werner & Pfleiderer) and Japan Steel Works.

**Article of the invention**

Further, the invention relates to an article comprising the polypropylene composition according to the invention as defined above.

Preferably, the article comprises the polypropylene composition in an amount of more than 80 wt.%, more preferably at least 90 wt.-%, even more preferably at least 95 wt.-%, still more preferably 98 wt.-%, like 99 wt.-% of the polypropylene composition. It is especially preferred that the article consists of the polypropylene composition.

Preferably, said article is a moulded article, preferably an injection moulded (IM) or a blown moulded article, preferably an extrusion blow moulded article, more preferably an injection moulded article, preferably for pipe applications including fittings for a pipe, an article required for pipe connections such as couplers, or pipes.

Such fittings for a pipe, articles required for pipe connections, or pipes produced from the polypropylene composition according to the invention preferably have the advantageous properties as described above and shown below in the experimental part. Thus, the pipe according to the invention preferably qualifies as pressure pipe, more preferably as a hot and cold water pressure pipe.

Pipe of the invention can be

- a monolayer pipe, wherein the pipe layer comprises, preferably consists of, the multimodal polypropylene composition of the invention, or

- a multilayer pipe, wherein at least one layer comprises, preferably consists of, the multimodal polypropylene composition of the invention.

The preferred pipe of the invention has at least one layer comprising, preferably consisting of, the multimodal polypropylene composition of the invention More preferably, the pipe is for pressure pipe applications, preferably a pressure pipe for hot and cold water pipe applications.

A pipe further preferably has a pressure resistance of at least 22 h, more preferably 100 h, most preferably of at least 165 h, determined according to ISO 1167-1:2006 at a hoop stress of 4.5 MPa and 95 °C. The upper limit is usually not higher than 10000 h.

A pipe further preferably has a pressure resistance of at least 1 h, more preferably of at least 2 h, most preferably of at least 5 h, determined according to ISO 1167-1:2006 at a hoop stress of 16 MPa and 20 °C. The upper limit is usually not higher than 1000 h.

Fitting of the invention preferably consists of the multimodal polypropylene composition of the invention.

The invention further relates to the use of a polypropylene composition according to the invention for the production of an article as defined above.

*Production of pipe of the invention:*

Pipes can be produced from the bimodal polypropylene composition according to the present invention according to the methods known in the art. Thus, according to one preferred method the polypropylene composition is extruded through an annular die to a desired internal diameter, after which the polypropylene composition is cooled.

The pipe extruder preferably operates at a relatively low temperature and therefore excessive heat build-up should be avoided. Extruders having a high length to diameter ratio LID more than 15, preferably of at least 20 and in particular of at least 25 are preferred. The modern extruders typically have an LID ratio of from about 30 to 35.

The polymer melt is extruded through an annular die, which may be arranged either as end-fed or side-fed configuration. The side-fed dies are often mounted with their axis parallel to that of the extruder, requiring a right-angle turn in the connection to the extruder. The advantage of side-fed dies is that the mandrel can be extended through the die and this allows, for instance, easy access for cooling water piping to the mandrel.

After the plastic melt leaves the die it is calibrated to the correct diameter. In one method the extrudate is directed into a metal tube (calibration sleeve). The inside of the extrudate is pressurised so that the plastic is pressed against the wall of the tube.

According to another method the extrudate leaving the die is directed into a tube having a perforated section in the centre. A slight vacuum is drawn through the perforation to hold the pipe against the walls of the sizing chamber.

After the sizing the pipe is cooled, typically in a water bath having a length of about 5 metres or more.

*Production of Fittings of the invention:*

Fittings of the invention can be produced from the bimodal polypropylene composition according to the invention using the methods and equipment known in the art. Thus, according to one preferred method the polypropylene composition is moulded, preferably injection moulded or blown moulded, more preferably injection moulded, in a conventional manner using conventional moulding equipment, to a shape of a fitting for a pipe.

Examples

1. Determination Methods

a) Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene is measured at a temperature 230 °C and a load of 2.16 kg.

The melt index $MFR_2$ is herein assumed to follow the following mixing rule (equation 1):

$$MI_b = \left( w_1 \cdot MI_1^{-0.0965} + w_2 \cdot MI_2^{-0.0965} \right)^{-\frac{1}{0.0965}} \quad (eq. 1)$$

Where w is the weight fraction of the component in the mixture, MI is the melt index $MFR_2$ and subscripts b, 1 and 2 refer to the mixture (PP), component 1 (PP1) and component 2 (PP2), respectively.

b) Density

Density of the polymer was measured according to ISO 1183-1:2004 Method A on compression moulded specimen prepared according to EN ISO 1872-2 or ISO 19069-2 and is given in $kg/m^3$.

c) Comonomer content

The comonomer content was determined by quantitative Fourier transform infrared spectroscopy (FTIR) after basic assignment calibrated via quantitative $^{13}$C nuclear magnetic resonance (NMR) spectroscopy in a manner well known in the art. Thin films are pressed to a thickness of between 100-500 micrometer and spectra recorded in transmission mode.

Specifically, the ethylene content of a polypropylene-co-ethylene copolymer is determined using the baseline corrected peak area of the quantitative bands found at 720-722 and 730-733 $cm^{-1}$. Specifically, the butene or hexene content of a polypropylene copolymer is determined using the baseline corrected peak area of the quantitative bands found at 1377-1379 $cm^{-1}$. Quantitative results are obtained based upon reference to the film thickness.

The comonomer content is herein assumed to follow the mixing rule (equation 2):

$$C_b = w_1 \cdot C_1 + w_2 \cdot C_2 \quad (eq. 2)$$

Where C is the content of comonomer in weight-%, w is the weight fraction of the component in the mixture and subscripts b, 1 and 2 refer to the overall mixture (PP), component 1 (PP1) and component 2 (PP2), respectively.

As it is well known to the person skilled in the art the comonomer content in weight basis in a binary copolymer can be converted to the comonomer content in mole basis by using the following equation

$$c_m = \frac{1}{1 + \left(\frac{1}{c_w} - 1\right) \cdot \frac{MW_c}{MW_m}} \quad (eq.\,3)$$

where $c_m$ is the mole fraction of comonomer units in the copolymer, $c_w$ is the weight fraction of comonomer units in the copolymer, $MW_c$ is the molecular weight of the comonomer (such as ethylene) and $MW_m$ is the molecular weight of the main monomer (i.e., propylene).

d) Xylene Cold Solubles

Xylene cold solubles (XCS, wt.-%) content was determined at 25 °C according ISO 16152; first edition; 2005-07-01.
The content of xylene soluble polymer is herein assumed to follow the mixing rule (equation 4):

$$XS_b = w_1 \cdot XS_1 + w_2 \cdot XS_2 \quad (eq.\,4)$$

Where XS is the content of xylene soluble polymer in weight-%, w is the weight fraction of the component in the mixture and subscripts b, 1 and 2 refer to the overall mixture (PP), component 1 (PP1) and component 2 (PP2), respectively.

e) Flexural Modulus

The flexural modulus was determined according to ISO 178. The test specimens having a dimension of 80 $\times$ 10 $\times$ 4.0 mm$^3$ (length $\times$ width $\times$ thickness) were prepared by injection molding according to EN ISO 1873-2 or ISO 19069-2. The length of the span between the supports was 64 mm, the test speed was 2 mm/min.

f) Tensile Modulus

Tensile Modulus was determined according to ISO 527-2 on test specimen of type 1A molded specimen having a thickness of 4 mm at 1 mm/min and 23°C, the Injection moulding carried out according to ISO 1873-2:2007 or ISO 19069-2.

g) Charpy Notched Impact Strength

Charpy notched impact strength (Charpy NIS) was determined according to ISO 179/eA:2000 on notched injection moulded type 1A specimens. Testing temperature is 23±2°C for Charpy NIS at 23°C and 0±2°C for Charpy NIS at 0°C. Injection moulding carried out according to ISO 1873-2:2007 or ISO 19069-2 and samples were conditioned for 24 hrs after injection molding.

h) Crystallization Temperature, Melting Temperature

The crystallization temperature $T_c$ and the melting temperature $T_m$ were measured with a Mettler TA820 differential scanning calorimetry device (DSC) on 10 $\pm$ 3 mg samples according to ISO 11357-3:1999. Crystallization temperature was obtained during 10 °C/min cooling and heating scans between 30 °C and 225 °C.
The crystallization temperatures were taken as the peaks of the exotherms of said peaks.
The melting temperatures were taken as the peaks of endotherms.

i) Rheological parameters

The characterization of polymer melts by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression moulded plates, using nitrogen atmosphere and setting a strain within the linear viscoelastic regime. The oscillatory shear tests were done at T 200°C applying a frequency range between 0.01 and 600 rad/s and setting a gap of 1.3 mm.
In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \qquad (1)$$

If the applied strain is within the linear viscoelastic regime, the resulting sinusoidal stress response can be given by

$$\sigma(t) = \sigma_0 \sin(\omega t + \delta) \qquad (2)$$

where

$\sigma_0$ and $\gamma_0$ are the stress and strain amplitudes, respectively
$\omega$ is the angular frequency
$\delta$ is the phase shift (loss angle between applied strain and stress response)
t is the time

Dynamic test results are typically expressed by means of several different rheological functions, namely the shear storage modulus G', the shear loss modulus, G", the complex shear modulus, G*, the complex shear viscosity, $\eta$*, the dynamic shear viscosity, $\eta$', the out-of-phase component of the complex shear viscosity $\eta$" and the loss tangent, tan $\delta$ which can be expressed as follows:

$$G' = \frac{\sigma_0}{\gamma_0}\cos\delta \ [Pa] \qquad (3)$$

$$G' = \frac{\sigma_0}{\gamma_0}\sin\delta \ [Pa] \qquad (4)$$

$$G^* = G' + iG'' \ [Pa] \qquad (5)$$

$$\eta^* = \eta' - i\eta'' \ [Pa.s] \qquad (6)$$

$$\eta' = \frac{G''}{\omega} \ [Pa.s] \qquad (7)$$

$$\eta'' = \frac{G'}{\omega} \ [Pa.s] \qquad (8)$$

The determination of so-called Shear Thinning Index, which correlates with MWD and is independent of Mw, is done as described in equation 9.

$$SHI_{(x/y)} = \frac{Eta^* \text{ for } (G^* = x \text{ kPa})}{Eta^* \text{ for } (G^* = y \text{ kPa})} \qquad (9)$$

For example, the $SHI_{(0.1/100)}$ is defined by the value of the complex viscosity, in Pa s, determined for a value of G* equal to 0.1 kPa, divided by the value of the complex viscosity, in Pa s, determined for a value of G* equal to 100 kPa.
The values of storage modulus (G'), loss modulus (G"), complex modulus (G*) and complex viscosity ($\eta$*) were obtained as a function of frequency ($\omega$).
Thereby, e.g. $\eta^*_{300}$ (eta*$_{300}$) is used as abbreviation for the complex viscosity at the frequency of 300 rad/s

and $\eta^*_{0.05}$ (eta$^*_{0.05}$) is used as abbreviation for the complex viscosity at the frequency of 0.05 rad/s.

The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus "Interpolate y-values to x-values from parameter" and the "logarithmic interpolation type" were applied.

References:

[1] Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol., 11th (1992), 1, 360-362

[2] The influence of molecular structure on some rheological properties of polyethylene", Heino, E.L., Borealis Polymers Oy, Porvoo, Finland, Annual Transactions of the Nordic Rheology Society, 1995.).

[3] Definition of terms relating to the non-ultimate mechanical properties of polymers, Pure & Appl. Chem., Vol. 70, No. 3, pp. 701-754, 1998.

j) Molecular weight distribution MWD, Mw, Mn

The weight average molecular weight Mw and the molecular weight distribution (MWD = Mw/Mn wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 15 2,6-Di tert butyl-4-methyl-phenol) as solvent at 145 °C and at a constant flow rate of 1 ml/min. 216.5 $\mu$l of sample solution were injected per analysis. The column set was calibrated using relative calibration with 19 narrow MWD polystyrene (PS) standards in the range of 0.5 kg/mol to 11 500 kg/mol and a set of well characterized broad polypropylene standards. 20 All samples were prepared by dissolving 5 - 10 mg of polymer in 10 ml (at 160 °C) of stabilized TCB (same as mobile phase) and keeping for 3 hours with continuous shaking prior sampling in into the GPC instrument.

In case of PP the constants are: K: $19\times10^{-3}$ ml/g and a: 0.725 for PP.

k) Hydrostatic pressure test (HPT)

The resistance to internal pressure has been determined in a pressure test on pressure test on un-notched 32 mm $\times$ 3mm SDR 11 pipes having a length of 450 mm is carried out in water-inside and water-outside environment according to ISO 1167-1:2006. End caps of type A were used. The time to failure is determined in hours. A hoop stress of 4.5 MPa at a temperature of 95°C or a hoop stress of 16 MPa at a temperature of 20°C was applied.

2. Examples

a) Preparation of the catalyst

First, 0.1 mol of MgCl$_2$ $\times$ 3 EtOH was suspended under inert conditions in 250 ml of decane in a reactor at atmospheric pressure. The solution was cooled to the temperature of -15°C and 300 ml of cold TiCl$_4$ was added while maintaining the temperature at said level. Then, the temperature of the slurry was increased slowly to 20 °C. At this temperature, 0.02 mol of diethylhexylphthalate (DOP) was added to the slurry. After the addition of the phthalate, the temperature was raised to 135 °C during 90 minutes and the slurry was allowed to stand for 60 minutes. Then, another 300 ml of TiCl$_4$ was added and the temperature was kept at 135 °C for 120 minutes. After this, the catalyst was filtered from the liquid and washed six times with 300 ml heptane at 80 °C. Then, the solid catalyst component was filtered and dried. Catalyst and its preparation concept is described in general e.g. in patent publications EP 491 566, EP 591 224 and EP 586 390.

b) Preparation of Examples IE1 and IE2 and comparative Example CE

For the preparation of Examples IE1 and IE2, triethylaluminium (TEAL), dicyclopentyldimethoxysilane (DCPDMS) as donor (Do), catalyst as produced above and vinyl cyclohexane (VCH) were added into oil, like mineral oil, e.g.

Technol 68 (kinematic viscosity at 40 °C 62-74 cSt), in amounts so that Al/Ti was 3-4 mol/mol, Al/Do was as well 3-4 mol/mol, and weight ratio of VCH/solid catalyst was 1:1. The mixture was heated to 60 - 65 °C and allowed to react until the content of the unreacted vinylcyclohexane in the reaction mixture was less than 1000 ppm. Catalyst concentration in the final oil-catalyst slurry was 10 - 20 wt-%.

For the preparation of Comparative Example CE the preparation of the oil-catalyst slurry was conducted as described above for Examples IE1 and IE2 with the exception that no vinylcyclohexane (VCH) was added into oil and no polymerisation step of VCH at 60 - 65 °C was performed.

For the polymerization of Examples IE1 and IE2 and Comparative Example CE the catalyst was fed together with propylene to a prepolymerization reactor. Triethylaluminium was used as a cocatalyst and dicyclopentyldimethoxysilane as a donor. The polymerization conditions and feeds are listed in Table 1.

The slurry from the prepolymerization stage was directly fed to a loop reactor. Propylene, hydrogen and ethylene were further added to the loop reactor. The polymerization conditions and feeds are listed in Table 1.

The slurry from loop reactor was introduced to a gas phase reactor via direct feed line, i.e. without monomer flashing in-between the reactors. Propylene, ethylene and hydrogen were fed to the gas phase reactor. The polymerization conditions and feeds are listed in Table 1.

The final Poly-VCH content in the obtained final polymers of Examples IE1 and IE2 was 200 ppm or less.

In Examples IE1 and IE2 as well as in the Comparative Example CE the low molecular weight fraction of the propylene random copolymer is polymerized in the loop reactor whereas the high molecular weight fraction of the propylene random copolymer is polymerized in the subsequent gas phase reactor in the presence of the low molecular weight fraction. The polymerization conditions of IE1 and IE2 and Comparative Example CE are shown in Table 1.

c) Compounding and pipe extrusion

The polypropylene resins of Inventive Examples IE1 and IE2 and Comparative Example CE emerging from the gas phase reactor (identified as reactor powder) were compounded together with conventional antioxidants and Ca-stearate (R-PP composition, same amounts were used for Examples IE1 and IE2 as well as in the Comparative Example CE) and pelletized in a W&P ZSK 70 twin-screw extruder (Coperion) at a melt temperature of 250°C and an extruder throughput of 200 kg/h.

The polymer pellets of Inventive Examples IE1 and IE2 as well as in the Comparative Example CE were prepared to test specimens for the tests as listed below in Table 2 or were extruded to pipes in order to test the pressure resistance and processability of the compositions. The test pipe preparation from the polymers of comparative example and inventive examples were extruded by using a Krauss Maffei pipe extruder. Output of the extruder was 50 to 60 kg/h, melt pressure was 100 to 120 barg and the melt temperature was 220 to 230 °C. The test pipes had a diameter of 32.3 mm and wall thickness of 3 mm. The shrinkage of the produced test pipes was clearly less than 5 %.

Table 1: Polymerization conditions of IE1 and IE2 and Comparative Example CE

| | | CE | IE1 | IE2 |
|---|---|---|---|---|
| **Prepolymerization** | | | | |
| Catalyst Type | | As in IE1, 2 but no pVCH modification | pVCH modified catalyst | pVCH modified catalyst |
| Temperature | °C | 30 | 30 | 30 |
| Pressure | bar | 54 | 54 | 54 |
| Donor feed | [g/t(C3)] | 40 | 35 | 35 |
| TEAL feed | [g/t(C3)] | 150 | 150 | 150 |
| Loop Reactor | | | | |
| Temperature | °C | 70 | 70 | 70 |
| Pressure | bar | 54 | 54 | 54 |
| H2/C3 feed | mol/kmol | 0.78 | 0.71 | 0.71 |
| $MFR_2$ | g/10min | 0.85 | 0.75 | 0.75 |
| XCS | wt% | 3.0 | 3.5 | 3.6 |
| C2 content ($C2_{PP1}$) | wt% | 2.30 | 2.67 | 2.70 |

(continued)

| Loop Reactor | | | | |
|---|---|---|---|---|
| Split | wt% | 45 | 44.2 | 43.6 |
| **Gas Phase Reactor** | | | | |
| Temperature | °C | 75 | 75 | 75 |
| Pressure | barg | 22 | 22 | 22 |
| H2/C3 feed | mol/kmol | 2.0 | 1.8 | 1.8 |
| C2/C3 | mol/kmol | 32.0 | 36.4 | 36.6 |
| C2 content in GPRfraction calculated* ($C2_{PP2}$) | wt% | 6.5 | 5.6 | 5.7 |
| Final $MFR_2$ | g/10min | 0.30 | 0.27 | 0.27 |
| Final XCS | wt% | 8.2 | 6.4 | 6.8 |
| Final C2 content ($C2_{PP}$) | wt% | 4.6 | 4.3 | 4.4 |
| Split | wt% | 55 | 55.8 | 56.4 |
| **R-PP composition** | | | | |
| $MFR_2$ | g/10min | 0.30 | 0.27 | 0.27 |
| C2 content ($C2_{PP}$)** | wt% | 4.6 | 4.4 | 4.4 |
| XCS | wt% | 8.2 | 6.5 | 6.8 |
| $C2_{PP1}/C2_{PP}$*** | | 0.50 | 0.62 | 0.61 |
| $C2_{PP1}/C2_{PP2}$**** | | 0.35 | 0.48 | 0.47 |
| $MFR_{2(PP)}/MFR_{2(PP1)}$ | | 0.35 | 0.36 | 0.36 |

C2 content refers to the ethylene comonomer content; C3 refers to the propylene monomer feed.
* calculated for the polymer polymerised in the gpr reactor (high molecular weight HMW fraction)
** measured from final polypropylene composition after the compounding step (a) as described above
*** C2 content Loop Reactor (PP1) in wt% / Final C2 content in gas phase reactor in wt% ($C2_{PP1}/C2_{PP}$)
**** C2 content Loop Reactor (PP1) in wt% / C2 content calculated in gas phase reactor component (PP2) in wt% ($C2_{PP1}/C2_{PP2}$)

Table 2: Properties of IE1 and IE2 and Comparative Example CE

| | Unit | CE | IE1 | IE2 |
|---|---|---|---|---|
| $MFR_2$ pellets | g/10min | 0.30 | 0.27 | 0.27 |
| Charpy NIS, 23°C | $kJ/m^2$ | 38 | 75.2 | 78.0 |
| Charpy NIS, 0°C | $kJ/m^2$ | 6.9 | 8.9 | 9.1 |
| Flexural Modulus | MPa | 889 | 895 | 951 |
| Tensile Modulus | MPa | 851 | 940 | 910 |
| Tc | °C | 104.7 | 114.5 | 115.1 |
| Tm | °C | 141.4 | 143.4 | 144.0 |
| Mw | (g/mol) | 656100 | 662000 | 678500 |
| Mn | (g/mol) | 46800 | 45100 | 41550 |
| Mw/Mn | | 14.0 | 14.8 | 16.3 |

(continued)

|  | Unit | CE | IE1 | IE2 |
|---|---|---|---|---|
| ETA (300 rad/s) | Pas | 666 | 703 | 681 |
| HPT (4.5 MPa, 95 °C) | Hrs | 1036 | 2550 | 2615 |
| HPT (16 MPa, 20 °C) | Hrs | 13 | 25 | 16 |

It can be seen from the results of Tables 1 and 2 that the Examples IE1 and IE2 according to the invention show an improved balance of properties in terms of Charpy notched impact strength at room temperature (23°C) and cold temperature (0°C), flexural modulus, tensile modulus, XCS, $eta_{300}$. Both inventive examples show improved Charpy impact strength at room temperature (23°C) and cold temperature (0°C) while flexural modulus and tensile modulus at least remain at a high level. Furthermore, processability is comparable as can be seen by $MFR_2$ and $eta_{300}$. Further, the pressure resistance of Examples IE1 and IE2 is improved.

The invention is based on the surprising finding that such advantageous balance between stiffness and impact may in particular be achieved by carefully selecting the comonomer content in LMW fraction (PP1) and HMW fraction (PP2) and the molecular weight, as can be seen by the $MFR_2$, propylene copolymer, and a bimodal molecular weight distribution.

This is achieved by carefully selecting the comonomer content and the molecular weight of the LMW fractions (PP1) and HMW fractions (PP2) together, as can be seen by the $MFR_{2\ PP}/MFR_{2\ PP1}$, in a bimodal propylene copolymer and comonomer ratio $C2_{PP1}/C2_{PP2}$, as well as the slightly higher overall comonomer ratio $C2_{PP1}/C2_{PP}$. Furthermore, by adjusting the splits, the final comonomer content and the $MFR_2$ of the inventive example even it is very similar in molecular weight distribution as can be seen by the $M_w/M_n$, but significantly improve the stiffness (flexural modulus) and better stiffness-impact balance as seen by better HPT performance of pipes by using the inventive examples.

**Claims**

1. A polypropylene composition comprising

    a base resin (A) and a nucleating agent (B),
    wherein the base resin (A) consists of a bimodal propylene copolymer (PP) with at least one comonomer being ethylene
    wherein the bimodal propylene copolymer (PP) comprises

       (PP1) a first propylene copolymer component and
       (PP2) a second propylene copolymer component, and

    wherein the first propylene copolymer component (PP1) is different from the second propylene copolymer component (PP2), and
    wherein the weight ratio of the first propylene copolymer component (PP1) including an optional prepolymer component to the second propylene copolymer component (PP2) is from 30:70 to 70:30, and
    wherein the polypropylene composition has

       (a) a melt flow rate $MFR_2$ (2.16 kg, 230°C) of 0.15 to 0.50 g/10 min, determined according to ISO 1133 at 230 °C and a load of 2.16 kg,
       (b) a total comonomer content of 3.5 to 5.0 wt. % based on the total weight of the bimodal propylene copolymer (PP) determined as described in the specification,
       (c) a content of xylene cold solubles (XCS) of equal to or below 8.2 wt.% based on the total weight of the bimodal propylene copolymer (PP) determined according to ISO 16152, and
       (d) a Charpy Notched Impact Strength at 23°C of 45.0 $kJ/m^2$ to 95.0 $kJ/m^2$ and a Charpy Notched Impact Strength at 0°C of at least 6.0 $kJ/m^2$ both determined according to ISO 179/eA:2000 using notched injection moulded type 1A specimens.

2. The polypropylene composition according to claim 1, wherein the weight ratio of the comonomer content of the first propylene copolymer component (PP1) to the comonomer content of the bimodal propylene copolymer (PP), both expressed in wt%, $C2_{PP1}/C2_{PP}$, is 0.40 to 0.75.

3. The polypropylene composition according to claims 1 or 2, wherein the comonomer content of the second propylene copolymer component (PP2) is 4.5 to 9.0 wt based on the total weight of the second propylene copolymer component (PP2) determined as described in the specification and/or the weight ratio of the comonomer content of the first propylene copolymer component (PP1) to the comonomer content of the second propylene copolymer component (PP2) both expressed in wt%, $C2_{PP1}/C2_{PP2}$, is 0.36 to 0.54.

4. The polypropylene composition according to any one of the preceding claims, wherein the first propylene copolymer component (PP1) has a higher $MFR_2$ than the second propylene copolymer component (PP2), preferably the first propylene copolymer component (PP1) has a melt flow rate $MFR_2$ of 0.4 to 2.0 g/10 min and/or wherein the bimodal propylene copolymer (PP) has a melt flow rate $MFR_2$ of 0.15 to 0.50 g/10 min.

5. The polypropylene composition according to any one of the preceding claims, wherein the ratio of the $MFR_2$ of the bimodal propylene copolymer (PP) to the $MFR_2$ of the first propylene copolymer component (PP1), $MFR_{2\,PP}/MFR_{2\,PP1}$ is 0.20 to 0.50.

6. The polypropylene composition according to any one of the preceding claims, wherein the weight ratio of the first propylene copolymer component (PP1) including an optional prepolymer component to the second propylene copolymer component (PP2) is from 38:62 to 60:40.

7. The polypropylene composition according to any one of preceding claims having a Flexural Modulus of 700 to 1400 MPa determined according to ISO 178, and/or a tensile modulus of from 700 to 1200 MPa determined according to ISO 527-2 using injection moulded type 1A specimens.

8. The polypropylene composition according to any one of preceding claims wherein the bimodal propylene copolymer (PP) has a xylene soluble content (XCS) of 4.0 to 8.0 wt.% determined according to ISO 16152 at 25°C.

9. The polypropylene composition according to any one of the preceding claims having a melting temperature Tm of from 135 to 155° C determined according to ISO 11357- -3 and/or a crystallization temperature Tc of not less than 100° C determined according to ISO 11357 -3.

10. The polypropylene composition according to any one of the preceding claims, wherein the bimodal propylene copolymer (PP) does not contain an elastomeric polymer phase dispersed therein and/or the bimodal propylene copolymer does not contain LLDPE.

11. The polypropylene composition according to any of the preceding claims, wherein the nucleating agent (B) is a polymer of vinyl compound according to the following formula

$$CH_2=CH-CHR^1R^2 \qquad (BI)$$

wherein $R^1$ and $R^2$ together form a 5- or 6-membered saturated, unsaturated or aromatic ring, optionally containing substituents, or independently represent an alkyl group comprising 1 to 4 carbon atoms, whereby in case $R^1$ and $R^2$ form an aromatic ring, the hydrogen atom of the $-CHR^1R^2$ moiety is not present.

12. A process for producing a polypropylene composition according to any of the preceding claims, wherein the bimodal propylene copolymer (PP) with at least one comonomer being ethylene is polymerized in a multistage polymerization process in the presence of

(I) a solid catalyst component comprising a magnesium halide, a titanium halide and an internal electrom donor; and
(II) a cocatalyst comprising an aluminium alkyl and optionally an external electron donor, and
(III) an optional nucleating agent (B), preferably in the presence of a nucleating agent (B);
the multistage process comprising the steps of

(a) continuously polymerizing propylene together with a comonomer selected from alpha-olefins with 2 or 4 to 8 carbon atoms, preferably ethylene, in a first polymerization stage by introducing streams of propylene, hydrogen and ethylene into the first polymerization stage at a temperature of 60 to 80°C and a pressure of 3000 to 6500 kPa to produce a first propylene copolymer component, wherein said first propylene copolymer component (PP1) preferably has a melt flow rate $MFR_2$ 0.4 to 2.0 g/10 min (2.16 kg; 230°C; ISO 1133);

(b) withdrawing from the first polymerization stage a stream comprising said first propylene copolymer component (PP1) and transferring said stream into a second polymerization stage;

(c) polymerizing propylene together with a comonomer selected from alpha-olefins with 2 or 4 to 8 carbon atoms, preferably ethylene, in said second polymerization stage by introducing streams of propylene, ethylene and optionally hydrogen into said second polymerization stage at a temperature of 70 to 90°C and a pressure of 1000 to 3000 kPa to produce a bimodal propylene copolymer (PP) of said first propylene copolymer component (PP1) and a second propylene copolymer component (PP2);

(d) continuously withdrawing a stream comprising said bimodal propylene copolymer (PP) from the second polymerization stage and optionally mixing said bimodal propylene copolymer (PP) with additives; and

(e) extruding said bimodal propylene copolymer mixture into pellets, which have a melt flow rate $MFR_2$, (2.16kg; 230°C; ISO 1133) of 0.15 to 0.5 g/10min,

and wherein the first propylene copolymer component (PP1) is different from the second propylene copolymer component (PP2), and preferably has a higher MFR than the second propylene copolymer component (PP2).

13. A polypropylene composition according to any one of claims 1 to 11 obtainable by the process according to claim 12.

14. An article comprising the polypropylene composition according to any one of claims 1 to 11 or claim 13.

15. Use of a polypropylene composition according to any one of claims 1 to 11 or claim 13 for the production of an article.

Europäisches
Patentamt

European
Patent Office

Office européen
des brevets

# EUROPEAN SEARCH REPORT

Application Number

EP 22 21 5379

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 796 502 A1 (ABU DHABI POLYMERS CO LTD BOROUGE [AE]; BOREALIS AG [AT]) 29 October 2014 (2014-10-29) * examples 1,2 * | 1-15 | INV. C08L23/14 C08F210/06 C08F2/00 |
| X | EP 2 796 501 A1 (ABU DHABI POLYMERS CO LTD BOROUGE [AE]; BOREALIS AG [AT]) 29 October 2014 (2014-10-29) * example CE1 * | 1-15 | |
| X | EP 2 796 498 A1 (ABU DHABI POLYMERS CO LTD BOROUGE [AE]; BOREALIS AG [AT]) 29 October 2014 (2014-10-29) * example CE1 * | 1-15 | |
| A | EP 2 796 500 A1 (ABU DHABI POLYMERS CO LTD BOROUGE [AE]; BOREALIS AG [AT]) 29 October 2014 (2014-10-29) * Reference examples 1-3; examples 1,2 * | 1-15 | |

TECHNICAL FIELDS
SEARCHED (IPC)

C08F
C08L

The present search report has been drawn up for all claims

| Place of search | Date of completion of the search | Examiner |
|---|---|---|
| Munich | 9 May 2023 | Iraegui Retolaza, E |

**EP 4 389 820 A1**

## ANNEX TO THE EUROPEAN SEARCH REPORT
### ON EUROPEAN PATENT APPLICATION NO.

EP 22 21 5379

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2023

| Patent document cited in search report | | Publication date | Patent family member(s) | | Publication date |
|---|---|---|---|---|---|
| EP 2796502 | A1 | 29-10-2014 | AU | 2014256449 A1 | 29-10-2015 |
| | | | BR | 112015026921 A2 | 25-07-2017 |
| | | | CN | 105229074 A | 06-01-2016 |
| | | | EP | 2796502 A1 | 29-10-2014 |
| | | | EP | 2989158 A1 | 02-03-2016 |
| | | | KR | 20150145244 A | 29-12-2015 |
| | | | KR | 20170089945 A | 04-08-2017 |
| | | | PL | 2989158 T3 | 28-02-2020 |
| | | | RU | 2015142818 A | 26-05-2017 |
| | | | SG | 11201508080Y A | 27-11-2015 |
| | | | US | 2016145428 A1 | 26-05-2016 |
| | | | WO | 2014173534 A1 | 30-10-2014 |
| EP 2796501 | A1 | 29-10-2014 | AU | 2014256527 A1 | 12-11-2015 |
| | | | BR | 112015026919 A2 | 25-07-2017 |
| | | | CN | 105264007 A | 20-01-2016 |
| | | | EP | 2796501 A1 | 29-10-2014 |
| | | | EP | 2989157 A1 | 02-03-2016 |
| | | | ES | 2569078 T3 | 06-05-2016 |
| | | | ES | 2662038 T3 | 05-04-2018 |
| | | | KR | 20160022291 A | 29-02-2016 |
| | | | PH | 12015502345 A1 | 22-02-2016 |
| | | | PL | 2796501 T3 | 31-01-2017 |
| | | | PL | 2989157 T3 | 28-09-2018 |
| | | | RU | 2015144626 A | 25-05-2017 |
| | | | SG | 11201508280Q A | 27-11-2015 |
| | | | US | 2016075865 A1 | 17-03-2016 |
| | | | WO | 2014173475 A1 | 30-10-2014 |
| EP 2796498 | A1 | 29-10-2014 | AU | 2014256448 A1 | 12-11-2015 |
| | | | BR | 112015026920 A2 | 25-07-2017 |
| | | | CN | 105283504 A | 27-01-2016 |
| | | | EP | 2796498 A1 | 29-10-2014 |
| | | | EP | 2989161 A1 | 02-03-2016 |
| | | | KR | 20150143523 A | 23-12-2015 |
| | | | KR | 20170104001 A | 13-09-2017 |
| | | | PL | 2796498 T3 | 29-03-2019 |
| | | | PL | 2989161 T3 | 28-06-2019 |
| | | | RU | 2015144628 A | 26-05-2017 |
| | | | SG | 11201508160X A | 27-11-2015 |
| | | | TR | 201819958 T4 | 21-02-2019 |
| | | | US | 2016060441 A1 | 03-03-2016 |
| | | | WO | 2014173533 A1 | 30-10-2014 |
| EP 2796500 | A1 | 29-10-2014 | AU | 2014256446 A1 | 12-11-2015 |
| | | | BR | 112015026477 A2 | 25-07-2017 |

For more details about this annex : see Official Journal of the European Patent Office, No. 12/82

EPO FORM P0459

## ANNEX TO THE EUROPEAN SEARCH REPORT
## ON EUROPEAN PATENT APPLICATION NO.

EP 22 21 5379

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2023

| Patent document cited in search report | Publication date | Patent family member(s) | | Publication date |
|---|---|---|---|---|
| | | CN | 105283505 A | 27-01-2016 |
| | | EP | 2796500 A1 | 29-10-2014 |
| | | EP | 2989160 A1 | 02-03-2016 |
| | | EP | 3323851 A1 | 23-05-2018 |
| | | KR | 20150135437 A | 02-12-2015 |
| | | KR | 20170090526 A | 07-08-2017 |
| | | PL | 2796500 T3 | 31-12-2018 |
| | | PL | 2989160 T3 | 18-05-2020 |
| | | RU | 2015150047 A | 26-05-2017 |
| | | SG | 11201508292R A | 27-11-2015 |
| | | US | 2016024288 A1 | 28-01-2016 |
| | | WO | 2014173531 A1 | 30-10-2014 |

EPO FORM P0459

For more details about this annex : see Official Journal of the European Patent Office, No. 12/82

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1028984 A
- WO 006831 A
- WO 9858975 A
- WO 9858976 A
- EP 887380 A
- WO 9858977 A
- GB 1580635 A
- US 4582816 A
- US 3405109 A
- US 3324093 A
- EP 479186 A
- US 5391654 A
- US 3374211 A
- US 3242150 A
- EP 1310295 A
- EP 891990 A
- EP 1415999 A
- EP 1591460 A
- EP 1860125 A
- EP 887379 A
- EP 887381 A
- EP 991684 A
- US 4933149 A
- EP 684871 A
- WO 2005087361 A
- US 4578879 A
- EP 600414 A
- EP 721798 A
- WO 2007025640 A
- US 4543399 A
- EP 699213 A
- WO 9425495 A
- EP 696293 A
- WO 0029452 A
- US 4621952 A
- EP 188125 A
- EP 250169 A
- EP 579426 A
- US 5026795 A
- US 4803251 A
- US 4532311 A
- US 4855370 A
- EP 560035 A
- EP 707513 A
- WO 8707620 A
- WO 9221705 A
- WO 9311165 A
- WO 9311166 A
- WO 9319100 A
- WO 9736939 A
- WO 9812234 A
- WO 9933842 A
- WO 9219659 A
- WO 9219653 A
- WO 9219658 A
- US 4347160 A
- US 4382019 A
- US 4435550 A
- US 4465782 A
- US 4473660 A
- US 4530912 A
- US 4560671 A
- EP 491566 A
- EP 591224 A
- EP 586390 A

### Non-patent literature cited in the description

- **HANS ZWEIFEL.** Plastic Additives Handbook. 2009, 1141-1190
- **GELDART ; BAYENS.** The Design of Distributors for Gas-fluidized Beds. *Powder Technology,* 1985, vol. 42
- **GELDART.** Gas Fluidization Technology. J.Wiley & Sons, 1986
- **HEINO, E.L. ; LEHTINEN, A. ; TANNER J. ; SEPPÄLÄ, J.** Rheological characterization of polyethylene fractions. *Theor. Appl. Rheol., Proc. Int. Congr. Rheol, 11th,* 1992, vol. 1, 360-362
- **HEINO, E.L.** The influence of molecular structure on some rheological properties of polyethylene. *Annual Transactions of the Nordic Rheology Society,* 1995
- Definition of terms relating to the non-ultimate mechanical properties of polymers. *Pure & Appl. Chem.,* 1998, vol. 70 (3), 701-754